# EUROPEAN PATENT SPECIFICATION

(11) **EP 3 815 537 B1**
(45) Date of publication and mention of the grant of the patent: **11.03.2026**
(21) Application number: 20194885.8
(22) Date of filing: 07.09.2020
(51) Int. Cl.: A23G 1/54, A23G 1/22, A23G 3/34, A23P 30/10, A23G 1/00

(54) **MOULDABLE PASTE WITH SOLID PARTICLES**
FORMBARE PASTE MIT FESTEN TEILCHEN
PÂTE MOULABLE CONTENANT DES PARTICULES SOLIDES

(30) Priority: 06.09.2019 BE 201905591
(43) Date of publication of application: 05.05.2021
(73) Proprietor: De Laet International, 2150 Borsbeek (BE)
(72) Inventor: De Laet, Alain, 2150 Borsbeek (BE)
(74) Representative: Arnold & Siedsma

(56) References cited:
- EP-A1- 0 931 461
- EP-A1- 2 428 120
- EP-A2- 2 820 957
- WO-A1-01/78519
- WO-A1-2008/142074
- DE-A1- 3 119 885
- GB-A- 2 402 648

## Description

### TECHNICAL FIELD OF THE INVENTION

The present invention relates to the processing of a mouldable paste with solid particles, in particular in the handling of such a paste into a mould with embossing elements. The invention is particularly suitable in the production of a chocolate tablet or bar which contains solid particles: such as almond, hazelnut, caramel, sea salt, and the like.

### BACKGROUND OF THE INVENTION

For the production of chocolate we normally use moulds of various shapes, sizes and embossing elements. Such moulds are typically filled with a certain amount of chocolate mixture, set into vibration and hardened under active cooling. The vibration process provides for removal of any air bubbles out of the chocolate mixture and the active cooling provides for a correct solidification and shrinkage of the chocolate, so that the moulded chocolate falls out of the mould after the overturning of the mould.

Chocolate production with solid particles, such as for example a cake filling seen in EP 2428120creates some additional challenges related to the production process. It is therefore sometimes desirable to introduce the solid particles only at certain places in the chocolate, but on the other hand a homogeneous distribution of the solid particles throughout the chocolate mixture is also preferable. The introduction of solid particles may however in existing manufacturing processes result in chocolate with partial fracture lines and even broken chocolate.

This problem occurs for example in a production process in which a chocolate mixture is mixed with solid particles, and the resulting mixture is transferred into a mould having one or more relief elements. Once the final product is cooled, the chocolate breaks in the packaging process and this results in a final product that is unacceptable to the consumer.

There is therefore a clear need for a production process in which solid particles with variable sizes may be introduced into a chocolate mixture without the firmness of the end product being influenced, in particular, in the preparation in a mould having one or more relief elements.

The present invention provides a manufacturing process that counters the above-mentioned disadvantages of the existing manufacturing processes, and in particular offers a solution for the insufficient rigidity of the end product. Where we anticipate that the mixing of solid particles of mouldable chocolate paste provides the greatest rigidity for the production of chocolate, the surprising result of the present invention is that filling of the mould in a specific order, results in a solid final product that does not break during the packaging process and thereby achieves the desired result for the consumer.

### SUMMARY OF THE INVENTION

It is an advantage of the present invention that conventional moulds can be used.

It is an advantage of the present invention that there conventional venting techniques can also be used.

A further advantage of the present invention is that conventional hardening techniques can be used.

It is also an advantage of the present invention that conventional packaging techniques can be used.

A further advantage of the present invention is that the solid particles do not settle down in the paste during the production process. This ensures, among other that the solid particles positioning can be checked in the final product, and this without any prejudice to the strength of the final product.

To this aim, the present invention provides a method for the processing of a mouldable paste with solid particles into a mould with one or a plurality of elements in relief, set out in claim 1.

In a preferred embodiment, the mould is composed of one or more of the following materials: plastic, metal and wood.

In a preferred embodiment, the template contains multiple relief elements.

In a preferred embodiment, the mould comprises a number of relief elements with uneven shapes.

In a preferred embodiment, the mould is opened only on a single side.

In a preferred embodiment, the portion of the mould with the one or more relief elements is at least completely filled with mouldable paste.

In a preferred embodiment, the solid particles are distributed homogeneously in the applied layer.

In a preferred embodiment, the deposited layer of solid particles is invisible from the outside of the formed paste.

In a preferred embodiment, the hardening of the paste is provided by active cooling.

In a preferred embodiment, the volume of the hardened paste is smaller than the volume of the mouldable paste.

In a preferred embodiment, the hardened paste falls from the mould by the mere inversion of the mould.

In a preferred embodiment, the second deposited layer of solid particles is invisible from the outside of the formed paste.

In a preferred embodiment, the solid particles are distributed homogeneously in the applied second layer.

The invention also provides a process for the preparation of a hardening mouldable paste with solid particles, in which the filled mould is de-aerated by the vibration of the mould.

In a preferred embodiment the mouldable chocolate paste contains a mixture of cocoa butter, cocoa mass, milk powder, lecithin and sugar.

It is an advantage of the present invention, that the mouldable chocolate paste can contain a variable percentage of cocoa.

The invention also provides a process for the preparation of a hardening mouldable paste with solid particles, wherein the solid particles are conventional add-ons for chocolate as provided in the appended set of claims.

In a preferred embodiment, the chocolate contains caramel and sea salt.

The invention also provides a process for the preparation of a out-curable mouldable chocolate paste with solid particles, wherein the mould is a tablet or bar.

In an embodiment, the invention provides a hardened paste as set out in claim 13.

In a preferred form, the solid particles are absent in all relief elements.

The invention also provides for obtaining a hardened paste by means of a method for processing of a mouldable paste, wherein the solid particles comprise one or more layers across the surface of the hardened paste outside of the one or more relief elements.

The invention also provides for obtaining a hardened paste by means of a method for processing of a mouldable paste wherein the solid particles are usual additives for chocolate such as almond, hazelnut, caramel, sea salt, and the like.

### BRIEF DESCRIPTION OF THE FIGURES

Fig. 1 is a side view of the long side of the hardened paste (1B) according to an embodiment of the present invention.
Fig. 2 is a side view of the short side of the hardened paste (1B) according to an embodiment of the present invention.
Fig. 3 is a side view of the long side of the mould according to an embodiment of the present invention.

With specific reference now to the figures, we stress that the particulars shown are only by way example and only for the illustrative discussion of the various embodiments of the present invention. They are presented with the purpose of delivering what is seen as the most useful and immediate description of the principles and conceptual aspects of the invention. In this respect, we do not attempt to show more structural details of the invention than what is necessary for a fundamental understanding of the invention. The description in conjunction with the drawings makes apparent to those skilled in the art how the several forms of the invention may be embodied in practice.

### DETAILED DESCRIPTION OF THE INVENTION

The present invention will be described with respect to certain embodiments and certain drawings but is not limited thereto, except as by the claims. The drawings, as further described, are only schematic and non-limiting. In the drawings, some elements may not be drawn to scale for illustrative purposes. The dimensions and the relative dimensions do not correspond to the actual limitations in practice.

Furthermore, the terms first, second, further and the like in the description and in the claims, are used for distinguishing between similar elements and not necessarily for describing a sequence, either in time, space, ranking or in any other manner. It is to be understood that the terms so used are interchangeable under appropriate circumstances, and that the embodiments of this invention other than those described or illustrated sequence may be used herein.

The term 'including', used in the claims, should not be interpreted as being limited to the following means; other elements or steps are not excluded. We give here the stated features, integers, steps or components, but the presence or addition of one or more other features, integers, steps, components or groups is not hereby excluded.

The scope of the expression 'a process comprising A and B' should therefore not be limited to a method which solely consist of the steps A and B. This means that the relevant steps of the method are A and B, and other steps like C may be present in the present invention.

When in this specification reference is made to "one embodiment" or "an embodiment", we mean that a particular feature or structure, or a particular feature relating to the embodiment, is included in at least one embodiment of the present invention. When "in one embodiment" or "in an embodiment" is referred to in various places throughout this specification, it refers not necessarily to the same embodiment. In addition, certain features, structures, steps or features can be combined in any suitable manner, such as that can be considered applicable for one of ordinary skill in the art in one or more embodiments.

In addition, it applies that the description of examples of embodiments and various features of the invention are sometimes grouped together in a single embodiment, figure, or description to streamline the disclosure and the information regarding one or more inventive aspects. From this way of disclosure, however, it should not be concluded that the claimed invention requires more features than are expressly mentioned in each claim. As can be seen from the following claims, the inventive aspects are rather in less than all features of one embodiment as can be found listed above. For this reason, the claims follow the detailed description expressly incorporated into this detailed description, and each claim is a separate embodiment of this invention.

Although some of the embodiments are described herein, but do not contain other features of other embodiments, the combinations of features of different embodiments fall within the scope of the invention, and together they form different embodiments, which will be understood by skilled persons. In the following conclusions, for example, all claimed embodiments can be used in any combination.

In the description that is given herein, various specific details may be mentioned. However, the embodiments of the invention may be put into practice without these specific details. In other instances, well-known methods, structures and techniques have not been shown in detail in order to avoid obscuring this description.

The following terms are referred to only in order to illustrate the invention.

The term "processing" describes an as complete as possible transfer of a first element to a second element using a particular technique, such as for example, pouring, spraying and scooping. For example, the expression "the processing of a mouldable paste with solid particles in a mould' should be interpreted as a mouldable paste which is in a certain manner as complete as possible transferred into a mould.

The terms "fill" and "filling" describe the introduction of a first element into a second element by means of, for example, pouring and spraying techniques. The expression "the filling of one or a plurality of relief elements with the mouldable paste" is to be interpreted as a mouldable paste which is preferably sprayed or cast in a mould.

As used herein and unless otherwise indicated, "not sagging" of a first element to a second element means the first element continues to be at the same position relative to the second element during and after the execution of a particular process.

As used herein and unless otherwise indicated, the "affixing" of a first element to a second element means in any way substantially covering of the second element to the first element. For example, the expression "applying a layer of solid particles on the mouldable paste" must be interpreted as the substantial covering of the paste with solid particles. A common technique for coating is spreading through spreaders.

As used herein and unless otherwise indicated, the term 'deformable' means the possibility of plastic modification of a material. Therefore the expression 'a deformable paste' must be interpreted as a paste which, making use of for example manual or machine labour, can undergo plastic changes.

The term "hardening" describes the transition from a liquid form to a solid form. Therefore the expression 'the hardening of the paste' must be interpreted as the transformation of a deformable paste to a non-deformable paste by the use of, inter alia, cooling and air flow.

As used herein and unless otherwise indicated, "turn", means the change of the position of the upper side of the element relative to the lower surface. Typically, it involves a change in position at an angle of 90° to 180° around the axis of the element. For example, the expression "the mere turning over of the mould" should be interpreted as a change in position of the mould at a given angle of for instance 180° about the axis of the mould.

A first embodiment of the present invention relates to a method as set out in claim 1. During the further filling of the mould the mouldable paste may or may not contain solid particles.

Preferably the method is used for the manufacture of chocolate objects, in particular bars or tablets of chocolate. Chocolate material comprises a large number of components. The main ingredients are, for example: cocoa powder, cocoa butter, lecithin, vanillin, sugar and milk powders. To give chocolate colours that differ from the typical colours of chocolate, such as red, green, orange dyes, both natural and synthetic, are added to the chocolate. It is also possible to use other legally permitted fats and oils, such as, for example, cocoline to be added to the chocolate composition. These viscosity-reducing agents are used to set the viscosity of the chocolate at the appropriate viscosity for the manufacturing process. Typically, we are working with a viscosity of from 5 to 10 pascal-second. Usually the quality of the chocolate, and therefore the chocolate object depends on the composition of the chocolate. The quality of the chocolate increases as the cocoa butter content in the composition is higher. The higher the cocoa butter content, the lower the melt viscosity of the chocolate composition. Preferably, the method according to the invention is characterised in that the chocolate composition is used with a high content of cocoa butter. Under high content we mean a content of from 5 to 20 weight percent of cocoa butter with respect to the total weight of the chocolate composition.

As used herein and unless otherwise indicated, the term "relief elements" on a plurality of alternating projections and recesses of the mould, wherein the number of relief elements is at least 1, 2, 3, 4, 5, 6, 7, 8, 9, 10, 15, 20, 30, 40, 50, or 100.

In some embodiments, the shape of the various relief elements is different.

In some embodiments, two or more layers of different types of solid particles without the mouldable paste are applied onto the relief elements filled with mouldable paste.

The layer of particles matter consists of one or more of the following solid particles: almond, hazelnut, caramel, sea salt, nougat, coconut, pecan, and the like.

In some embodiments, the mould is composed of a single component.

In some embodiments, the mould is composed of two or more components.

In some embodiments, the mould consists of two interconnected parts.

In some embodiments, the mould is opened only on a single side, through which the mouldable paste may be processed in the mould.

In some embodiments, the mould consists of one or more of the following materials: plastic, metal and wood. Suitable plastics are for instance thermosetting (co) polymers such as epoxies, and unsaturated polyester resins, and thermoplastic (co)polymers such as polyamides (PA), polypropylene (PP), polyethylene (PE) and the like.

In some embodiments, various deformable pastes may be used for the filling of the mould. For example, there may be a first deformable paste used for the filling of the one or more relief elements, and a second or even a plurality of deformable pastes for the further filling of the mould.

In some embodiments, the deposited layer of solid particles without mouldable paste is partially visible on the outside of the formed paste.

The term "venting" describes removing as completely as possible the air bubbles from the processed mouldable paste in the mould. Conventional venting techniques may include vibration of the mould for a certain time and a certain number of times. These may be both horizontal and vertical vibrations, as well as a combination of both.

And in some embodiments, the vibration of the mould is carried out for a minimum of 1, 2, 3 seconds, to a maximum of 10, 11, 12, 13, 14, 15, 20, 30, 50, 100 seconds.

In some embodiments, the vibration of the mould is carried out several times, namely: a first time before adding the layer of solid particles, a second time after the addition of the layer of solid particles, and a third time after the further filling of the mould.

It is an advantage of the present invention the layer of solid particles after the venting of the filled mould does not sag.

In some embodiments, the minimum hardening time is 50 minutes.

In some embodiments, the mouldable paste is cooled by active cooling, for example using a cooled air stream with a wind speed of 10 meters per second. In a typical embodiment, the curing proceeds stepwise, whereby in a first step, the moulds are gradually cooled over a period of about 10 minutes from about 32° C to about 18° C.

In some embodiments, the volume of the cooled paste is less than the volume of the mouldable paste, whereby the cooled paste is little or not clamped in the mould and therefore can be removed in its entirety from the mould by the mere turning over of the mould.

It is an advantage of the present invention that the hardened paste can be removed from the mould as a single unit.

In some embodiments, the cooled paste is removed from the mould by inverting the mould and the application of one or more knock moves to the outside on the mould, more specifically, on the side of the relief elements.

In some embodiments, the cooled paste of the mould is removed by making use of one or a plurality of vibratory movements of the mould.

In some embodiments, the second layer of solid particles consists of a combination of different solids.

By analogy with the first layer, this second layer may also be applied without the mouldable paste. However, in contrast to the first layer, the second layer can also consist of the combination of solid particles having a mouldable paste. As mentioned already several deformable pastes may be used for the filling of the mould.

In some embodiments, both the first and the second layer consist of a combination of various solid particles, so that both layers may contain both same as different solid particles, and hence can be only partially different.

In some embodiments, at least 1, 2, 3, 4, 5, 10, 15, 20, 25, 30, 35, 40, 45, 50, 55, 60, 65, 70% of the solid particles have a grain size of between 1.0 and 6.0 mm; in particular between 2.0 and 5.0 mm; more in particular between 1.0 and 3.5 mm.

A seventh embodiment of the present invention relates to a method according to claim 5, wherein 75% of the solid particles of the first layer have a larger grain size than the 75% of the solid particles of the second layer.

In some embodiments, at least 1, 2, 3, 4, 5, 10, 15, 20, 25, 30, 35, 40, 45, 50, 55, 60, 65, 70% of the solid particles of the first layer is a larger grain size than the 75% of the solid particles of the second layer.

In some embodiments, at least 1, 2, 3, 4, 5, 10, 15, 20, 25, 30, 35, 40, 45, 50, 55, 60, 65, 70% of the solid particles of the first layer is a smaller grain size than the 75% of the solid particles of the second layer.

An eighth embodiment of the invention relates to a method according to claim 7, wherein the 75% of the solid particles of the first layer have a grain size situated between 1.0 and 6.0 mm; in particular between 2.0 and 5.0 mm; and 75% of the solid particles of the second layer have a grain size situated between 1.0 and 4.0 mm; in particular between 1.0 and 3.2 mm.

In some embodiments, at least 1, 2, 3, 4, 5, 10, 15, 20, 25, 30, 35, 40, 45, 50, 55, 60, 65, 70% of the solid particles of the first layer is of a grain size situated between 1.0 and 6.0 mm; in particular between 2.0 and 5.0 mm; and at least 1, 2, 3, 4, 5, 10, 15, 20, 25, 30, 35, 40, 45, 50, 55, 60, 65, 70% of the solid particles of the second layer has a grain size situated between 1.0 and 4.0 mm; in particular between 1.0 and 3.2 mm.

In some embodiments, one or more relief elements have a depth of up to 1/2 of the total depth of the mould; in particular a depth of between 1/10 and 1/2 of the overall depth of the mould.

In some embodiments, one or more relief elements have a depth of up to more than 1/2 of the total depth of the mould; in particular a depth of between 1/2 and 9/10 of the total depth of the mould.

In some embodiments, the filled mould is vented using a conventional venting technique.

As used herein and unless otherwise indicated, the term "chocolate spread" onto a mixture comprises at least one or more of the following components: cocoa butter, sugar, cocoa mass, milk, milk powder, an emulsifier, lecithin, flavouring agents (eg, vanillin).

In some embodiments, use is made of one or more of the following chocolate pastes: black chocolate paste, white chocolate paste, chocolate milk paste and pink chocolate paste.

A twelfth embodiment of the present invention relates to a method according the appended set of claims, wherein the solid particles are conventional additives, such as for chocolate: almond, hazelnut, caramel, sea salt, and the like.

A thirteenth embodiment of the present invention relates to a method according to the appended set of claims, wherein the mould is a tablet or bar-mould.

Other common shapes of the mould include the following: spherical, cube-shaped, beam-shaped, cone-shaped, pyramid-shaped, cylindrical, oval, star-shaped, shell-shaped, heart-shaped, ...

In some embodiments, the mould contains one or more relief elements in the form of letters or numbers.

A fourteenth embodiment of the invention relates to the hardened paste of claim 13.

Another embodiment of the present invention relates to a hardened paste according to the appended set of claims, wherein the solid particles are conventional additives, such as for chocolate: almond, hazelnut, caramel, sea salt, and the like.

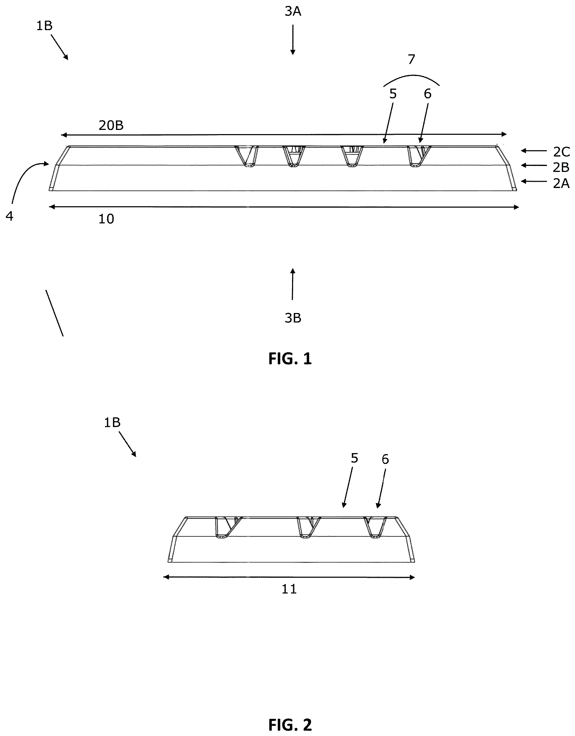

We now refer to Figure 1, a side view of the long side 10 of the hardened paste 1B according to an embodiment of the present invention. The hardened paste 1B is preferably a hardened chocolate paste, and includes a plurality of layers 2, namely: a primer layer 2A, an intermediate layer 2B, and a top layer 2C. Further, the hardened paste 1B includes an upper edge 3A and lower edge 3B. In the primer layer 2A optional solid particles 4 are processed such as sea salt. It is an advantage of the present invention, that the optional solid particles 4 are not visible. Preferably, the middle layer 2B contains homogeneously divided solid particles 4 such as caramel over the entire surface 20B of the middle layer 2B. The top layer 2C preferably comprises a plurality of relief elements 5. The relief elements 5 are preferably separated from each other by a plurality of recesses 6. The alternation of the recesses 6, and the relief elements 5 form a relief 7 to the top 3A of the hardened paste 1B.

We now refer to Figure 2, a side view of the short side 11 of the hardened paste 1B according to an embodiment of the present invention. The primer layer 2A, intermediate layer 2B, and top layer 2C are built to this short side 11 in the same way as to the long side 10 of the hardened paste 1B. The top layer 2C preferably also includes a plurality of relief elements 5, which are preferably separated from each other by a plurality of recesses 6. Therefore the alternation of the recesses 6, and the relief elements 5 form at the same time an embossment 7 at the top 3A of the hardened paste 1B.

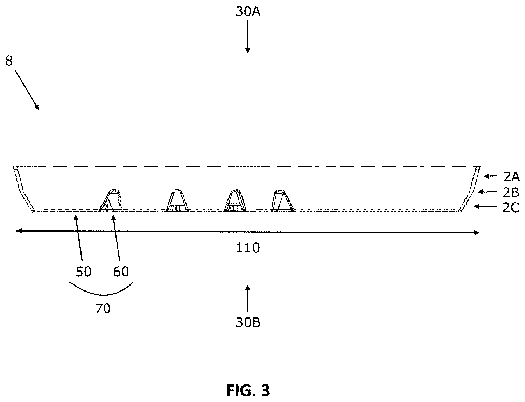

We now refer to Figure 3, a side view of the long side 110 of the mould 8 according to an embodiment of the present invention. The mould 8 comprises a top 30A and a bottom 30B, and is preferably manufactured from metal or plastic.

The mould 8 is preferably hollow and is preferably open at the top 30A. The mould 8 is filled preferably through the top layer 30A 2 per layer 2 with mouldable paste 1A and 1B, the hardened paste may then be removed from the mould 8. The shape of the mould 8 determines the shape of the hardened paste 1B.

The mould 8 preferably includes a plurality of relief elements 50 which are separated from each other by a plurality of recesses 60. The combination of the plurality of relief elements 50, and the plurality of recesses 60 form a relief 70 at the lower end 30B of the mould 8. This relief 70 may take various forms depending on the form of the relief elements 50.

The filling of the mould 8 in three layers 2 (ie, the primer layer 2A, intermediate layer 2B, and the top layer 2C), wherein the middle layer 2B is realised by exclusively solid particles 4 without mouldable paste 1A being applied, has the unexpected result that the hardened pastes 1B can hold solid particles 4, without the hardened paste 1B breaking at one or more locations in the production process and/or the packaging process. In contrast to what one would expect, this method does not form break lines at the level of the transition from the base layer 2A to the middle layer 2B nor at the level of the transition from the middle layer 2B to the top layer 2C. This provides a mechanically strong chocolate bar in accordance with embodiment 14, which preferably consists of a base layer 2A containing chocolate paste and sea salt, a middle layer 2B containing caramel and a top layer 2C of chocolate paste.

### LIST OF FEATURES

| number | designation |
|---|---|
| 1A | mouldable paste |
| 1B | hardened paste |
| 2 | layers |
| 2A | primer layer |
| 2B | middle layer |
| 2C | top layer |
| 3A | top (of the hardened paste) |
| 3B | bottom (of the hardened paste) |
| 4 | solid particles, |
| 5 | relief elements (of the hardened paste) |
| 6 | recesses (of the hardened paste) |
| 7 | relief (of the hardened paste) |
| 8 | mould |
| 10 | long side (of the hardened paste) |
| 11 | short side (of the hardened paste) |
| 20B | surface of the middle layer |
| 30A | top (of the mould) |
| 30B | bottom (of the mould) |
| 50 | relief elements (of the mould) |
| 60 | recesses (of the mould) |
| 70 | relief (from the mould) |
| 110 | long side (of the mould) |

## Claims

1. A method for processing of a mouldable paste (1A) with solid particles (4) in a mould (8) with one or a plurality of relief elements (50), comprising;
• Filling of the one or more relief elements (50) with the mouldable paste without solid particles (4);
• Applying a layer (2B) of solid particles (4); without the mouldable paste on the with mouldable paste filled relief elements (50), wherein the solid particles (4) form a layer (2) on the surface of the deformable paste outside the one or more relief elements (5), and wherein the solid particles (4) consist of one or more of almond, hazelnut, caramel, sea salt, nougat, coconut, and pecan.
• Furthermore, filling of the mould (8) with mouldable paste.

2. A process according to Claim 1, further comprising venting the filled mould (8), and then hardening the paste.

3. A method according to claim 2 further comprising the removal of the hardened paste from the mould (8).

4. A method according to claim 1, wherein the further filling of the mould (8) optionally is interrupted by the application of a second layer (20B) of solid particles (4) without a mouldable paste.

5. A method according to claim 4, wherein the solid particles (4) of the first (2B), second layer (20B) are the same or different, respectively; in particular different.

6. A process according to any one of the preceding claims, wherein 75% of the solid particles (4) have a grain size situated between 1.0 and 6.0 mm; in particular between 2.0 and 5.0 mm; more in particular between 1.0 and 3.5 mm.

7. A method according to claim 5; wherein 75% of the solid particles (4) of the first layer (2B) have a larger grain size than the 75% of the solid particles (4) of the second layer (20B).

8. A method according to claim 7; wherein 75% of the solid particles (4) of the first layer (2B) have a grain size situated between 1.0 and 6.0 mm; in particular between 2.0 and 5.0 mm; and 75% of the solid particles (4) of the second layer (20B) have a grain size situated between 1.0 and 4.0 mm; in particular between 1.0 and 3.2 mm.

9. A process according to any one of the preceding claims, wherein the one or more relief elements (50) have a depth of up to 1/2 of the total depth of the mould (8); in particular a depth of between 1/3 and 1/2 of the overall depth of the mould (8).

10. A method as claimed in claim 2, in which the filled mould (8) is vented by the vibration of the mould (8).

11. A process according to any one of the preceding claims, wherein the mouldable paste, is mouldable chocolate paste.

12. A process according to claim 11, wherein the mould (8) is a bar or tablet-mould.

13. A hardened paste with one or more relief elements (5) which contains solid particles (4) obtained by means of a method for processing of a mouldable paste according to any one of the preceding claims, and **characterised by** the absence of solid particles (4) into the single or a plurality of relief elements (5), wherein the solid particles (4) form one or more layers (2) on the surface of the hardened paste outside the one or more relief elements (5), and wherein the solid particles (4) consist of one or more of ;almond, hazelnut, caramel, sea salt, nougat, coconut, and pecan..

14. The hardened paste according to claim 13, wherein the one or more relief elements (5) a maximum of 1/2 of the total thickness of the hardened paste; in particular between 1/3 and 1/2 of the total thickness of the hardened paste (1).

15. The hardened paste according to any one of the preceding claims 13 to 14, wherein the mouldable paste is mouldable chocolate paste.

## Patentansprüche

1. Verfahren zum Verarbeiten einer formbaren Paste (1A) mit festen Partikeln (4) in einer Form (8) mit einem oder einer Vielzahl von Reliefelementen (50), umfassend;
• Füllen des einen oder der mehreren Reliefelemente (50) mit der formbaren Paste ohne feste Partikel (4);
• Aufbringen einer Schicht (2B) aus festen Partikeln (4); ohne die formbare Paste auf den mit formbarer Paste gefüllten Reliefelementen (50), wobei die festen Partikel (4) eine Schicht (2) auf der Oberfläche der verformbaren Paste außerhalb des einen oder der mehreren Reliefelemente (5) ausbilden, und wobei die festen Partikel (4) aus einem oder mehreren von Mandel, Haselnuss, Karamell, Meersalz, Nougat, Kokosnuss und Pekannuss bestehen.
• Ferner Füllen der Form (8) mit formbarer Paste.

2. Prozess nach Anspruch 1, ferner umfassend ein Entlüften der gefüllten Form (8) und anschließend ein Aushärten der Paste.

3. Verfahren nach Anspruch 2, ferner umfassend die Entfernung der ausgehärteten Paste aus der Form (8).

4. Verfahren nach Anspruch 1, wobei das weitere Füllen der Form (8) optional durch das Aufbringen einer zweiten Schicht (20B) von festen Partikeln (4) ohne eine formbare Paste unterbrochen wird.

5. Verfahren nach Anspruch 4, wobei die festen Partikel (4) der ersten (2B), zweiten Schicht (20B) jeweils gleich oder unterschiedlich sind; insbesondere unterschiedlich.

6. Prozess nach einem der vorstehenden Ansprüche, wobei 75 % der festen Partikel (4) eine Korngröße, die zwischen 1,0 und 6,0 mm liegt, aufweisen; insbesondere zwischen 2,0 und 5,0 mm; mehr insbesondere zwischen 1,0 und 3,5 mm.

7. Verfahren nach Anspruch 5; wobei 75 % der festen Partikel (4) der ersten Schicht (2B) eine größere Korngröße als die 75 % der festen Partikel (4) der zweiten Schicht (20B) aufweisen.

8. Verfahren nach Anspruch 7; wobei 75 % der festen Partikel (4) der ersten Schicht (2B) eine Korngröße, die zwischen 1,0 und 6,0 mm liegt, aufweisen; insbesondere zwischen 2,0 und 5,0 mm; und 75 % der festen Partikel (4) der zweiten Schicht (20B) eine Korngröße, die zwischen 1,0 und 4,0 mm liegt, aufweisen; insbesondere zwischen 1,0 und 3,2 mm.

9. Prozess nach einem der vorstehenden Ansprüche, wobei das eine oder die mehreren Reliefelemente (50) eine Tiefe von bis zu einer 1/2 der totalen Tiefe der Form (8) aufweisen; insbesondere eine Tiefe von zwischen einem 1/3 und einer 1/2 der Gesamttiefe der Form (8).

10. Verfahren nach Anspruch 2, wobei die gefüllte Form (8) durch die Vibration der Form (8) entlüftet wird.

11. Prozess nach einem der vorstehenden Ansprüche, wobei die formbare Paste eine formbare Schokoladenpaste ist.

12. Prozess nach Anspruch 11, wobei die Form (8) eine Riegel- oder Tablettenform ist.

13. Ausgehärtete Paste mit einem oder mehreren Reliefelementen (5), die feste Partikel (4), die mittels eines Verfahrens zum Verarbeiten einer formbaren Paste nach einem der vorstehenden Ansprüche erhalten werden, enthält, und **gekennzeichnet durch** das Fehlen von festen Partikeln (4) in dem einzelnen oder einer Vielzahl von Reliefelementen (5), wobei die festen Partikel (4) eine oder mehrere Schichten (2) auf der Oberfläche der ausgehärteten Paste außerhalb des einen oder der mehreren Reliefelemente (5) ausbilden, und wobei die festen Partikel (4) aus einem oder mehreren von Mandel, Haselnuss, Karamell, Meersalz, Nougat, Kokosnuss und Pekannuss bestehen.

14. Ausgehärtete Paste nach Anspruch 13, wobei das eine oder die mehreren Reliefelemente (5) ein Maximum von einer 1/2 der totalen Dicke der ausgehärteten Paste ausmachen; insbesondere zwischen einem 1/3 und einer 1/2 der totalen Dicke der ausgehärteten Paste (1).

15. Ausgehärtete Paste nach einem der vorstehenden Ansprüche 13 bis 14, wobei die formbare Paste formbare Schokoladenpaste ist.

## Revendications

1. Procédé pour le traitement d'une pâte moulable (1A) avec des particules solides (4) dans un moule (8) avec un ou une pluralité d'éléments en relief (50), comprenant :
• le remplissage du ou des éléments en relief (50) avec la pâte moulable sans particules solides (4) ;
• l'application d'une couche (2B) de particules solides (4) ; sans la pâte moulable sur les éléments en relief (50) remplis de pâte moulable, dans lequel les particules solides (4) forment une couche (2) sur la surface de la pâte déformable à l'extérieur du ou des éléments en relief (5), et dans lequel les particules solides (4) sont constituées d'un ou plusieurs parmi amande, noisette, caramel, sel de mer, nougat, noix de coco et noix de pécan.
• en outre, le remplissage du moule (8) avec de la pâte moulable.

2. Procédé selon la revendication 1, comprenant en outre le dégazage du moule (8) rempli, puis le durcissement de la pâte.

3. Procédé selon la revendication 2, comprenant en outre le retrait de la pâte durcie du moule (8).

4. Procédé selon la revendication 1, dans lequel le remplissage supplémentaire du moule (8) est éventuellement interrompu par l'application d'une seconde couche (20B) de particules solides (4) sans une pâte moulable.

5. Procédé selon la revendication 4, dans lequel les particules solides (4) de la première (2B) et de la seconde couche (20B) sont identiques ou différentes, respectivement ; en particulier différentes.

6. Procédé selon l'une quelconque des revendications précédentes, dans lequel 75 % des particules solides (4) ont une granulométrie située entre 1,0 et 6,0 mm ; en particulier entre 2,0 et 5,0 mm ; plus particulièrement entre 1,0 et 3,5 mm.

7. Procédé selon la revendication 5 ; dans lequel 75 % des particules solides (4) de la première couche (2B) ont une granulométrie plus grande que celle des 75 % des particules solides (4) de la seconde couche (20B).

8. Procédé selon la revendication 7 ; dans lequel 75 % des particules solides (4) de la première couche (2B) ont une granulométrie située entre 1,0 et 6,0 mm ; en particulier entre 2,0 et 5,0 mm ; et 75 % des particules solides (4) de la seconde couche (20B) ont une granulométrie située entre 1,0 et 4,0 mm ; en particulier entre 1,0 et 3,2 mm.

9. Procédé selon l'une quelconque des revendications précédentes, dans lequel le ou les éléments en relief (50) ont une profondeur allant jusqu'à la moitié de la profondeur totale du moule (8) ; en particulier une profondeur comprise entre le tiers et la moitié de la profondeur totale du moule (8).

10. Procédé selon la revendication 2, dans lequel le moule (8) rempli est dégazé par la vibration du moule (8).

11. Procédé selon l'une quelconque des revendications précédentes, dans lequel la pâte moulable est une pâte de chocolat moulable.

12. Procédé selon la revendication 11, dans lequel le moule (8) est un moule à barre ou à tablette.

13. Pâte durcie avec un ou plusieurs éléments en relief (5) qui contient des particules solides (4), obtenue au moyen d'un procédé pour le traitement d'une pâte moulable selon l'une quelconque des revendications précédentes, et **caractérisée par** l'absence de particules solides (4) dans l'élément en relief unique ou dans l'unique ou la pluralité d'éléments en relief (5), dans laquelle les particules solides (4) forment une ou plusieurs couches (2) sur la surface de la pâte durcie à l'extérieur du ou des éléments en relief (5), et dans laquelle les particules solides (4) sont constituées d'un ou de plusieurs parmi ;amande, noisette, caramel, sel de mer, nougat, noix de coco et noix de pécan.

14. Pâte durcie selon la revendication 13, dans laquelle le ou les éléments en relief (5) représentent au maximum la moitié de l'épaisseur totale de la pâte durcie ; en particulier entre le tiers et la moitié de l'épaisseur totale de la pâte durcie (1).

15. Pâte durcie selon l'une quelconque des revendications précédentes 13 à 14, dans laquelle la pâte moulable est une pâte de chocolat moulable.
